# EUROPÄISCHE PATENTSCHRIFT

(11) **EP 3 933 963 B1**
(45) Veröffentlichungstag und Bekanntmachung des Hinweises auf die Patenterteilung: **24.09.2025**
(21) Anmeldenummer: 20183540.2
(22) Anmeldetag: 01.07.2020
(51) Int. Cl.: H01M 4/04, H01M 4/139, H01M 4/75, H01M 10/058, H01M 10/42

(54) **VERFAHREN UND ANLAGE ZUR HERSTELLUNG ELEKTROCHEMISCHER ZELLEN SOWIE ELEKTRODE FÜR EINE ELEKTROCHEMISCHE ZELLE**
METHOD AND APPARATUS FOR MANUFACTURING ELECTROCHEMICAL CELLS AND ELECTRODE FOR AN ELECTROCHEMICAL CELL
PROCÉDÉ ET INSTALLATION DE FABRICATION D'ÉLÉMENTS ÉLECTROCHIMIQUES AINSI QU'ÉLECTRODE POUR UN ÉLÉMENT ÉLECTROCHIMIQUE

(43) Veröffentlichungstag der Anmeldung: 05.01.2022
(73) Patentinhaber: VARTA Microbattery GmbH, 73479 Ellwangen Jagst (DE)
(72) Erfinder: Elmer, Martin, 73479 Ellwangen (DE); Ensling, David, 73479 Ellwangen (DE); Renschler, Philipp, 73479 Ellwangen (DE); Schöbel, Klaus, 73479 Ellwangen (DE)
(74) Vertreter: Ostertag & Partner Patentanwälte mbB

(56) Entgegenhaltungen:
- EP-A1- 3 699 982
- EP-A2- 0 825 659
- EP-A2- 1 403 943
- WO-A1-2013/018254
- WO-A1-2019/077943
- JP-A- 2006 032 223
- JP-A- 2017 220 356
- JP-A- 2020 068 050

## Beschreibung

Die nachstehend beschriebene Erfindung betrifft ein Verfahren und eine Anlage zur Herstellung von zur Energiespeicherung befähigter elektrochemischer Zellen sowie eine Elektrode für eine solche elektrochemische Zelle.

Zur Energiespeicherung befähigte elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden Ionenstrom innerhalb der Zelle. Dieser Ionenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Die weit verbreiteten sekundären Lithium-Ionen-Zellen basieren auf dem Einsatz von Lithium, welches in Form von Ionen zwischen den Elektroden der Zelle hin und her wandern kann. Lithium-Ionen-Zellen zeichnen sich durch eine hohe Energiedichte aus.

Bei der negativen und der positiven Elektrode einer Lithium-Ionen-Zelle handelt es sich in der Regel um sogenannte Kompositelektroden, die neben elektrochemisch aktiven Komponenten (insbesondere Komponenten, die Lithium-Ionen reversibel interkalieren und deinterkalieren können) auch elektrochemisch inaktive Komponenten (Leitmittel, Elektrodenbinder, Stromkollektoren) umfassen. Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden.

In vielen Ausführungsformen ist der Verbundkörper eben ausgebildet, so dass mehrere Verbundkörper flach aufeinander gestapelt werden können. Sehr häufig wird der Verbundkörper aber in Form eines Wickels gebildet oder zu einem Wickel verarbeitet. In der Regel umfasst der Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Zur Herstellung der Kompositelektroden wird üblicherweise eine flache Schicht aus einem pastenförmigen Elektrodenmaterial, das neben einem Elektrodenbinder und gegebenenfalls einem Leitmittel eine elektrochemisch aktive Komponente (wird oft auch als Aktivmaterial bezeichnet) in Partikelform enthält, auf einen geeigneten Stromkollektor aufgebracht und anschließend getrocknet. Bevorzugt wird das Elektrodenmaterial auf beide Seiten des Stromkollektors aufgebracht. Produktionstechnisch wird dies meist realisiert, indem die Stromkollektoren als quasi endlose Bänder bereitgestellt werden, die anschließend eine Beschichtungsvorrichtung durchlaufen, in der durch intermittierende Beschichtung eine abgesetzte, in Laufrichtung in definierten Abständen unterbrochene Beschichtung des Stromkollektors erfolgt. Das aus der Beschichtungsvorrichtung austretende Stromkollektorband weist entsprechend in Laufrichtung alternierend beschichtete und unbeschichtete Abschnitte auf.

Eine Auftrennung des Stromkollektorbandes kann anschließend durch Zerschneiden des Bandes in den unbeschichteten Abschnitten erfolgen. Bei Bedarf kann das Stromkollektorband weiterhin in Streifen geschnitten werden. So lassen sich aus jedem der beschichteten Abschnitte zwei oder mehr einzelne Elektroden herstellen.

Nach Verarbeitung der so hergestellten Elektroden zu Verbundkörpern erfolgt deren Überführung in ein Gehäuse. Die grundsätzliche Funktionsfähigkeit der Zelle kann dann durch Tränkung des Verbundkörpers mit einem Elektrolyten hergestellt werden. Die so gebildete Zelle kann dann einem Funktions- und Leistungstest unterzogen werden.

Für die Qualität einer Zelle ist die Fehlerfreiheit der hergestellten Elektroden von zentraler Bedeutung. Die Verwendung fehlerhafter Elektroden bedeutet in der Regel, dass damit gebaute Zellen als Ausschussware aussortiert werden müssen.

Es wäre wünschenswert, gegebenenfalls auftretende Fehler und Toleranzabweichungen zumindest für die relevantesten Bauteile einer elektrochemischen Zelle möglichst früh zu erkennen und im Idealfall außerhalb einer Toleranz befindliche oder fehlerhafte Bauteile möglichst schnell auszusortieren zu können. Hierzu wäre eine Rückverfolgbarkeit der Bauteile in der Produktionskette erforderlich und natürlich eine entsprechende Möglichkeit zur eindeutigen Identifizierung. Aktuell lassen sich Einzelkomponenten elektrochemischer Zellen bestenfalls Chargen zuordnen.

Aus der WO 2019/077943 A1 ist es bekannt, Stromkollektoren mit Markierungen zu versehen. Die Markierungen sind dabei nicht näher spezifiziert.

Aus der JP 2017-220356 A ist es bekannt, Markierungen in Form von Löchern in die Randbereich von Stromkollektoren einzubringen.

Die JP 2006-32223 A betrifft Bleiakkumulatoren, die Stromkollektoren umfassen, auf welchen Informationen über die jeweilige Elektrode abgelegt sind. Unter anderem dient der Code dazu, defekte Elektroden identifizieren zu können.

Die EP 1403943 A2 betrifft Zellen, bei denen ein Stromkollektor sandwichartig eine Elektrode umschließt. Auf den Stromkollektor wird ein Matrixcode aufgebracht, der Informationen über die jeweilige Elektrode enthält.

In der EP 825659 A2 ist die Markierung von Elektroden mittels Barcodes und anderen maschinenlesbaren Kennzeichnungen als Stand der Technik beschrieben. Im Rahmen der beschriebenen Erfindung ist dann erwähnt, Codes auf einen Stromkollektor aufzubringen.

In der WO 2013/018254A1 werden Zellen beschrieben, bei denen die einzelnen Elektroden mit einem Code versehen sind, der eine eindeutige Identifizierung der Elektroden ermöglicht. Der Code ist bevorzugt unmittelbar auf dem Stromkollektor aufgebracht. Bei dem Code kann es sich beispielsweise um einen Barcode handeln.

Die JP 2020-68050 A betrifft Zellen, bei denen die Elektroden jeweils eine eindeutige Markierung, beispielsweise in Form eines Matrixcodes aufweisen. Die Markierungen bestehen dabei aus einem organischen Material.

Zur Lösung der oben genannten Schwierigkeiten werden das Verfahren mit den Merkmalen des Anspruchs 1 sowie die Anlage und Elektrode gemäß den Ansprüchen 5 und 6 vorgeschlagen. Weitere bevorzugte Ausgestaltungen des Verfahrens ergeben sich aus den abhängigen Ansprüchen.

Gegenstand der Erfindung ist die Herstellung von zur Energiespeicherung befähigter elektrochemischer Zellen mit einem Verbundkörper, der aus mindestens zwei Elektroden und mindestens einem Separator gebildet ist. Besonders bevorzugt umfassen die herzustellenden Zellen
- ein einen Innenraum einschließendes, bevorzugt aus zwei oder mehr Gehäuseteilen zusammengesetztes Gehäuse, und
- den in dem Innenraum angeordneten, aus den mindestens zwei Elektroden und dem mindestens einen Separator gebildeten Verbundkörper.

Erfindungsgemäß wird bei der Herstellung der elektrochemischen Zellen eine maschinenlesbare Codierung, insbesondere einen Strichcode und/oder einen 2D-Code, auf den auf Verbundkörper oder auf mindestens ein Bestandteil des Verbundkörpers oder gegebenenfalls auf mindestens eines der Gehäuseteile oder ein sonstiges Bauteil der herzustellenden Zelle, beispielsweise eine Dichtung, aufgetragen. Dies bringt diverse Vorteile mit sich:
- Die Einzelkomponenten einer elektrochemischen Zelle sind gegebenenfalls bis hin zu den Einzelbestandteilen des Verbundkörpers rückverfolgbar.
- Innerhalb einer Anlage zur Herstellung der elektrochemischen Zellen ist aufgrund der individuellen Markierung jederzeit nachvollziehbar, wo sich beispielsweise eine einzelne Elektrode innerhalb eines Produktionsprozesses befindet.
- Beim Testen von Zellen können mögliche Korrelationen zwischen Produktionsparametern und der Funktion oder den Leistungswerten der fertigen Zellen hergestellt werden.

Unter einer maschinenlesbaren Codierung werden erfindungsgemäß sowohl ein einzelner maschinenlesbarer Code, also beispielsweise ein einzelner Strichcode oder ein einzelner 2D-Code, als auch eine Mehrzahl an maschinenlesbaren Codes, also beispielsweise mehrere 2D-Codes in einer Reihe, verstanden.

In dem Verbundkörper sind die Elektroden in der Sequenz positive Elektrode / Separator / negative Elektrode angeordnet.

Bei den herzustellenden elektrochemischen Zellen handelt es sich bevorzugt um sekundäre Lithium-Ionen-Zellen mit den erwähnten Kompositelektroden aus mit Elektrodenmaterialien beschichteten Stromkollektoren.

Als Aktivmaterialien für Anode und Kathode der Zellen können im Grunde sämtliche für sekundäre Lithium-Ionen-Zellen bekannten elektrochemisch aktiven Komponenten verwendet werden.

In der negativen Elektrode können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Auch einige Verbindungen von Silizium, Aluminium, Zinn und/oder Antimon können Lithium reversibel ein- und auslagern. Beispielsweise kann in einigen bevorzugten Ausführungsformen das Silizium in oxidischer Form in der negativen Elektrode enthalten sein. Alternativ oder zusätzlich kann auch Lithiumtitanat (Li₄Ti₅O₁₂) oder ein Derivat desselben in der negativen Elektrode enthalten sein, bevorzugt ebenfalls in Partikelform.

Für die positive Elektrode kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden.

Die Aktivmaterialien werden bevorzugt in eine Matrix aus einem Elektrodenbinder eingebettet, wobei benachbarte Partikel in der Matrix bevorzugt in unmittelbarem Kontakt miteinander stehen. Übliche Elektrodenbinder basieren beispielsweise auf Polyvinylidenfluorid (PVDF), Polyacrylat oder Carboxymethylzellulose.

Weiterhin können den Elektroden Leitmittel zugesetzt werden. Leitmittel dienen dazu, die elektrische Leitfähigkeit der Elektroden zu erhöhen. Übliche Leitmittel sind Ruß und Metallpulver.

In der fertigen Zelle ist der Verbundkörper bevorzugt mit einem Elektrolyten getränkt, bevorzugt einem Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Stromkollektoren dienen dazu, im Elektrodenmaterial enthaltene elektrochemisch aktive Komponenten möglichst großflächig elektrisch zu kontaktieren. Bevorzugt bestehen die Stromkollektoren als einem Metall oder sind zumindest oberflächlich metallisiert. Als Metall für den Anodenstromkollektor eignen sich beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich beispielsweise Aluminium oder auch andere elektrisch leitfähige Materialien, insbesondere auch Aluminiumlegierungen.

Bevorzugt werden als Anodenstromkollektor und/oder als Kathodenstromkollektor jeweils Metallfolien, beispielsweise mit einer Dicke im Bereich von 4 µm bis 30 µm, eingesetzt.

Neben Folien können als Stromkollektoren allerdings auch andere Substrate wie metallische oder metallisierte Vliese oder offenporige Schäume oder Streckmetalle verwendet werden.

Als Separator kann beispielsweise eine elektrisch isolierende Kunststofffolie verwendet werden. Damit diese von dem Elektrolyten durchdrungen werden kann, weist sie bevorzugt Mikroporen auf. Die Folie kann beispielsweise aus einem Polyolefin oder aus einem Polyetherketon gebildet sein. Nicht ausgeschlossen ist, dass auch Vliese und Gewebe aus solchen oder ähnlichen Kunststoffmaterialien als Separatoren zum Einsatz kommen können.

Bei der herzustellenden elektrochemischen Zelle, insbesondere der herzustellenden Lithium-Ionen-Zelle, kann es sich um eine Knopfzelle handeln. Knopfzellen sind zylindrisch ausgebildet und weisen eine Höhe auf, die geringer als ihr Durchmesser ist. Bevorzugt liegt die Höhe der herzustellenden Knopfzelle im Bereich von 4 mm bis 15 mm. Weiter ist es bevorzugt, dass die herzustellende Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer gemäß dem Verfahren hergestellten, als Knopfzelle ausgebildeten Lithium-Ionen-Zelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die herzustellende elektrochemische Zelle, insbesondere die herzustellende Lithium-Ionen-Zelle, eine zylindrische Rundzelle. Zylindrische Rundzellen weisen eine Höhe auf, die größer als ihr Durchmesser ist. Sie eignen sich insbesondere für Anwendungen im Automobilbereich, für E-Bikes oder auch für andere Anwendungen mit hohem Energiebedarf.

Die Höhe herzustellender zylindrischer Rundzellen liegt bevorzugt im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität einer gemäß dem Verfahren hergestellten zylindrischen Rundzelle auf Lithium-Ionen-Basis beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

In allen Ausführungsformen, in denen die herzustellende Zelle eine Knopfzelle oder eine zylindrische Rundzelle ist, ist der in dem Innenraum angeordneten Verbundkörper bevorzugt zylindrisch ausgebildet, insbesondere als zylindrischer Wickel, der spiralförmig aufgerollte Elektroden- und Separatorschichten umfasst. Er weist entsprechend bevorzugt zwei endständige, im Wesentlichen kreisrunde Stirnseiten und einen umlaufenden Mantel auf.

Die zur Herstellung eines solchen Verbundkörpers benötigten Stromkollektoren und Separatoren sind bevorzugt bandförmig ausgebildet und weisen bevorzugt die folgenden Dimensionen auf:
- Eine Länge im Bereich von 0,3 m bis 25 m
- Eine Breite im Bereich 30 mm bis 145 mm

Im Falle einer zylindrischen Rundzelle mit dem Formfaktor 18 x 65 weisen die Stromkollektoren beispielsweise bevorzugt
- eine Breite von 56 mm bis 62 mm, bevorzugt von 60 mm, und
- eine Länge von nicht mehr als 1,5 m
auf.

Im Falle einer zylindrischen Rundzelle mit dem Formfaktor 21 x 70 weisen die Stromkollektoren beispielsweise bevorzugt
- eine Breite von 56 mm bis 68 mm, bevorzugt von 65 mm, und
- eine Länge von nicht mehr als 2,5 m
auf.

Das Gehäuse der Knopfzelle und der Rundzellen ist bevorzugt im Wesentlichen zylindrisch ausgebildet. In einer bevorzugten Ausführungsform weist das Gehäuse beispielsweise ein becherförmiges erstes Gehäuseteil mit einem Boden und einer umlaufenden Seitenwand und einer Öffnung und ein zweites Gehäuseteil, das die Öffnung verschließt, auf. In vielen weiteren bevorzugten Ausführungsformen sind die Gehäuseteile durch eine Kunststoffdichtung elektrisch voneinander isoliert.

Grundsätzlich können die im Rahmen des erfindungsgemäßen Verfahrens herzustellenden Verbundkörper auch in einem prismatischen Gehäuse angeordnet werden, insbesondere in der eingangs erwähnten gestapelten Form. Das Gehäuse ist in diesen Ausführungsformen nicht von einer elektrochemischen Zelle umfasst. Vielmehr umschließt es bevorzugt eine Vielzahl von Verbindkörpern.

Wenn das Gehäuse prismatisch ausgebildet ist, dann umfasst das Gehäuse in aller Regel mehrere rechteckige Seitenwände sowie ein polygonales, insbesondere rechteckiges Oberteil und ein polygonales, insbesondere rechteckiges Unterteil. Bevorzugt wird es aus einem ersten und einem zweiten Gehäuseteil zusammengesetzt, wobei das erste Gehäuseteil bevorzugt die Seitenwände und das polygonale Unterteil umfasst während das zweite Gehäuseteil bevorzugt dem polygonalen Oberteil entspricht.

Bevorzugt zeichnet sich das erfindungsgemäße Verfahren durch mindestens eines der unmittelbar folgenden Merkmale a. bis e. aus:
a. Der Verbundkörper ist zylindrisch ausgebildet und weist die zwei endständigen, im Wesentlichen kreisrunde Stirnseiten und den umlaufenden Mantel aus.
b. Der maschinenlesbare Code ist auf den Mantel aufgebracht.
c. Die Außenseite des Mantels wird zumindest teilweise, bevorzugt vollständig, durch eine Separatorwindung und/oder durch eine Klebefolie gebildet.
d. Die maschinenlesbare Codierung umfasst einen Strichcode oder ist ein Strichcode.
e. Bei den Strichen des Codes handelt es sich um kreisförmige Striche, die den Mantel umlaufen.

Besonders bevorzugt sind die unmittelbar vorstehenden Merkmale a., b., d. und e. in Kombination realisiert.

Die umlaufend aufgebrachte Codierung ermöglicht eine automatisierte Lesbarkeit bei der Verarbeitung des Verbundkörpers von allen Seiten.

Bei einem erfindungsgemäß verwendbaren Strichcode kann es sich insbesondere um einen Code handeln, der in einer der folgenden internationalen Normen festgelegt ist:
- ISO/IEC 15420 (Handelsstrichcodes EAN, UPC, IAN, JAN)
- ISO/IEC 16390 (Code der 2/5-Familie)
- ISO/IEC 16388 (Code 39)
- ISO/IEC 15417 (Code128)

In einigen Ausführungsformen ist es bevorzugt, einen anderen Code als einen Strichcode, beispielsweise einen 2D-Code, auf den Verbundkörper oder ein anderes Bauteil der herzustellenden Zelle aufzubringen. Als 2D-Codes kommen beispielsweise Codes in Frage, die in einer der folgenden internationalen Normen festgelegt sind:
- ISO/IEC 18004 (QR-Code)
- ISO/IEC 16022 (DataMatrix-Code)
- ISO/IEC JTC1 SC31 (Han-Xin-Code)
- ISO/IEC 15417

In einigen Ausführungsformen kann es sich bei dem maschinenlesbaren Code auch um einen Composite-Code handeln, also einen Code, der sich aus einem linearen Barcode und einem 2D-Code zusammensetzt.

In weiteren Ausführungsformen kann es sich bei dem Code auch um eine alphanumerische Zeichen umfassende Codierung, also beispielsweise eine aus Zahlen bestehende Codierung, eine aus Buchstaben bestehende Codierung oder um eine gemischte, also Zahlen und Buchstaben und gegebenenfalls auch Sonderzeichen (beispielsweise Satzzeichen wie Punkt und Komma, Plus und Minuszeichen, Klammern oder Buchstaben mit Diakritika) umfassende Codierung, handeln. Selbstverständlich kann die Codierung auch Zeichen aus nicht-europäischen Sprachen, beispielsweise chinesische, japanische, koreanische oder kyrillische Zeichen umfassen.

In einigen besonders bevorzugten Ausführungsformen ist es auch möglich, dass die maschinenlesbare Codierung einen Strichcode oder einen 2D-Code oder einen Composite-Code in Kombination mit einem oder mehreren alphanumerischen Zeichen oder einer Abfolge alphanumerischer Zeichen umfasst.

Weitere Bestandteile der herzustellenden Zelle, die erfindungsgemäß bevorzugt mit der maschinenlesbaren Codierung versehen werden, sind die Gehäuseteile sowie gegebenenfalls die erwähnte Dichtung, die zwischen den Gehäuseteilen angeordnet werden kann.

In vielen Fällen ist es bevorzugt, die maschinenlesbare Codierung unmittelbar auf den Verbundkörper, den mindestens einen Bestandteil des Verbundkörpers oder das mindestens eine der Gehäuseteile oder eines der erwähnten sonstigen Bauteile der herzustellenden Zelle aufzubringen. Es kann aber auch bevorzugt sein, die Codierung auf mindestens ein Etikett aufzubringen, das dann auf den Verbundkörper, auf mindestens eines seiner Bestandteile oder auf ein sonstiges Bauteil der Zelle aufgebracht wird, insbesondere durch Verklebung.

In einer besonders bevorzugten Variante des erfindungsgemäßen Verfahrens wird mindestens eine der Elektroden des Verbundkörpers mit einer maschinenlesbaren Codierung versehen. Insbesondere werden sowohl die positive als auch die negative Elektrode mit einer maschinenlesbaren Codierung versehen.

Erfindungsgemäß wird zur Herstellung der Elektroden der elektrochemischen Zellen
a. mindestens eine Schicht aus einem Elektrodenmaterial auf einen eine Beschichtungsvorrichtung durchlaufenden bandförmigen Stromkollektor aufgebracht, wobei
b. das Aufbringen der Schicht intermittierend erfolgt, so dass der Stromkollektor nach Durchlaufen der Beschichtungsvorrichtung in Längsrichtung in mit Elektrodenmaterial beschichtete Abschnitte und dazwischen liegende unbeschichtete Abschnitte unterteilbar ist, und
c. der mit Elektrodenmaterial beschichtete bandförmige Stromkollektor mindestens eine Trennvorrichtung durchläuft, in der
   - in Längsrichtung die beschichteten und die unbeschichteten Abschnitte und
   - in Querrichtung die unbeschichteten Abschnitte
   durchtrennt werden, so dass aufeinanderfolgende der mit Elektrodenmaterial beschichteten Abschnitte voneinander separiert werden und jeder der beschichteten Abschnitte in Längsrichtung in mindestens zwei Teilabschnitte aufgetrennt wird. Dabei wird
d. jedem der beschichteten Abschnitte eine maschinenlesbare Codierung zugeordnet wird, die den jeweiligen Abschnitt kennzeichnet, und
e. die Codierung derart auf den bandförmigen Stromkollektor und/oder das darauf aufgebrachte Elektrodenmaterial aufgebracht, dass sie nach dem Durchlaufen der mindestens einen Trennvorrichtung auf jedem der Teilabschnitte abrufbar ist und eine Zuordenbarkeit der Teilabschnitte zu dem codierten Abschnitt ermöglicht.

Erfindungsgemäß gilt dabei Folgendes:
f. Die Codierung umfasst Linien oder besteht aus Linien, die senkrecht oder schräg zur Haupterstreckungsrichtung des bandförmigen Stromkollektors auf den bandförmigen Stromkollektor und/oder das darauf aufgebrachte Elektrodenmaterial aufgebracht werden.

Die abgetrennten Teilabschnitte entsprechen den Elektroden der herzustellenden Zellen, sie können gegebenenfalls unmittelbar weiterverarbeitet werden.

Dieses Verfahren ermöglicht es, Elektroden nach dem Schneidprozess in jedem Stadium des erfindungsgemäßen Verfahrens einem Stromkollektorband, einem Abschnitt auf dem Stromkollektorband und gegebenenfalls einer Spur innerhalb des Abschnitts zuzuordnen.

Besonders bevorzugt wird der bandförmige Stromkollektor beidseitig mit einer Schicht aus dem jeweiligen Elektrodenmaterial beschichtet.

In einer Weiterbildung der besonders bevorzugten Variante zeichnet sich das erfindungsgemäße Verfahren durch das folgende Merkmal a. aus:
a. Die maschinenlesbare Codierung umfasst einen Strichcode oder ist ein Strichcode.

Die Verwendung eines Strichcodes bringt bei der besonders bevorzugten Variante besondere Vorteile mit sich. So können die Linien des Strichcodes durch einen entsprechenden Längsschnitt in Haupterstreckungsrichtung des bandförmigen Stromkollektors zerteilt werden, ohne dass Information verloren geht. Ein Strichcode kann entsprechend nach Durchlaufen der mindestens einen Trennvorrichtung alle Teilabschnitte eines beschichteten Abschnitts kennzeichnen.

Einfacher wäre es, die Linien des Strichcodes in der Haupterstreckungsrichtung des bandförmigen Stromkollektors aufzubringen. Die beschriebenen Vorteile überwiegen aber die Schwierigkeiten, die sich bei der Aufbringung senkrecht oder schräg ausgerichteter Linien ergeben.

Bei einer schrägen Ausrichtung der Linien des Strichcodes schließen diese mit einem Längsrand des bandförmigen Stromkollektors bevorzugt einen Winkel von 89,9° bis 1°, besonders bevorzugt von 89,9° bis 25°, insbesondere von 89,9° bis 45°, ein.

Die Schicht aus dem Elektrodenmaterial wird meist in Form einer rechteckigen oder streifenförmigen Fläche auf den Stromkollektor aufgebracht. Die beschichteten Abschnitte weisen somit bevorzugt eine rechteckige oder streifenförmige Geometrie auf. In der besonders bevorzugten Variante weisen die Linien des Strichcodes bevorzugt eine Länge auf, welche der Breite der beschichteten Fläche entspricht oder diese überschreitet.

In einer Weiterbildung zeichnet sich das Verfahren weiter durch das folgende zusätzliche Merkmal a. aus:
a. Die einem beschichteten Abschnitt zugeordnete Codierung wird in mindestens einem der diesem Abschnitt unmittelbar angrenzenden unbeschichteten Abschnitte auf den Stromkollektor aufgebracht.

Es ist bevorzugt, die Codierung nach dem Aufbringen des Elektrodenmaterials auf den Stromkollektor aufzubringen. Es ist aber durchaus auch möglich, die Codierung bereits vor dem Durchlaufen der Beschichtungsvorrichtung auf den Stromkollektor aufzubringen. Dies kann sogar besonders vorteilhaft sein, die Codierung kann in dieser Ausführungsform nämlich auch als Markierung eines zu beschichteten Abschnitts dienen und somit helfen, die intermittierende Beschichtung des Stromkollektors zu steuern. Der Beschichtungsvorrichtung kann in dieser Ausführungsform eine Einrichtung zur Erkennung des aufgebrachten Codes zugeordnet sein.

Besonders bevorzugt wird die Codierung auf dem Stromkollektor, insbesondere in dem unbeschichteten Abschnitt, derart platziert, dass sie beim Durchtrennen des unbeschichteten Abschnitts in Querrichtung nicht beschädigt wird.

In einem einfachen Fall umfasst die Codierung eines Abschnitts eine Nummer, anhand der der Abschnitt eindeutig identifiziert werden kann. Besonders bevorzugt werden die Abschnitte laufend durchnummeriert.

Es ist weiterhin bevorzugt, dass sich die besonders bevorzugte Variante des Verfahrens durch mindestens eines der unmittelbar folgenden zusätzlichen Merkmale a. und b. auszeichnet:
a. Die Codierung beinhaltet, gegebenenfalls neben der Kennzeichnung des Abschnitts, das Ergebnis mindestens einer Prüfung, der der Abschnitt unterzogen wurde.
b. Die Codierung beinhaltet, gegebenenfalls neben der Kennzeichnung des Abschnitts, Informationen zur Länge und/oder zur Breite des Abschnitts.

Bei der Prüfung kann es sich beispielsweise um eine Prüfung der Dicke der Elektrodenbeschichtung handeln.

Eine gemäß der besonders bevorzugten Variante des erfindungsgemäßen Verfahrens hergestellte Elektrode zeichnet sich durch das folgende Merkmal a. aus:
a. Sie umfasst einen maschinenlesbaren Code, welcher Informationen beinhaltet, die eine Zuordenbarkeit der Elektrode zu einem mit Elektrodenmaterial beschichteten Abschnitt eines bandförmigen Stromkollektors, aus dem die Elektrode gefertigt wurde, ermöglichen.

Betreffend bevorzugte Ausführungsformen der Elektrode, ihrer Einzelbestandteile, des Codes und dessen Positionierung wird zur Vermeidung von Wiederholungen auf obenstehende Ausführungen Bezug genommen.

Weiterhin zeichnet sich die Elektrode durch die unmittelbar folgenden Merkmale a. und b. aus:
a. Die Elektrode ist bandförmig ausgebildet.
b. Die Codierung, insbesondere der Strichcode, umfasst Linien oder besteht aus Linien, die senkrecht oder schräg zur Haupterstreckungsrichtung der Elektrode ausgerichtet sind.

Eine zur Durchführung des erfindungsgemäßen Verfahrens geeignete Anlage, insbesondere eine zur Durchführung der besonders bevorzugten Variante des erfindungsgemäßen Verfahrens geeignete Anlage, zeichnet sich insbesondere durch eine Kombination der folgenden Merkmale aus:
a. Sie umfasst eine Beschichtungsvorrichtung, in der eine Schicht aus einem Elektrodenmaterial intermittierend auf einen die Beschichtungsvorrichtung durchlaufenden bandförmigen Stromkollektor aufgebracht wird.
b. Sie umfasst mindestens eine Trennvorrichtung, die dazu ausgebildet ist, den mit Elektrodenmaterial beschichteten bandförmigen Stromkollektor in Längsrichtung und in Querrichtung zu durchtrennen.
c. Sie umfasst eine Vorrichtung zur Aufbringung einer maschinenlesbaren Codierung auf den bandförmigen Stromkollektor und/oder das darauf aufgebrachte Elektrodenmaterial, welche dazu ausgebildet ist,
   - Linien senkrecht oder schräg zur Haupterstreckungsrichtung des bandförmigen Stromkollektors
   auf den bandförmigen Stromkollektor und/oder das darauf aufgebrachte Elektrodenmaterial aufzubringen.

Die Beschichtungsvorrichtung kann beispielsweise eine Düse umfassen, wie sie in der EP 2 775 771 B1 beschrieben ist. Die Trennvorrichtung kann zum Zertrennen des Stromkollektors mechanische Mittel, beispielsweise ein Messer, und/oder einen Laser umfassen. Bei der Vorrichtung zur Aufbringung der maschinenlesbaren Codierung kann es sich beispielsweise um einen Drucker handeln.

Ferner ist es möglich, die Codierung in Form eines Etiketts aufzubringen, insbesondere aufzukleben. Bei der Vorrichtung zur Aufbringung der maschinenlesbaren Codierung kann es sich somit auch um eine Etikettiervorrichtung handeln.

Bei dem Etikett kann es sich in einigen bevorzugten Ausführungsformen auch um einen RFID-Tag, der die maschinenlesbare Codierung umfasst, handeln. Die Codierung kann in diesem Fall über Funk ausgelesen werden.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

In den Zeichnungen zeigen schematisch
Fig. 1 eine Ausführungsform eines gemäß der besonders bevorzugten Variante des erfindungsgemäßen Verfahrens mit einem Strichcode versehenen und mit einer Schicht aus einem Elektrodenmaterial beschichteten Stromkollektors,
Fig. 2 eine weitere Ausführungsform eines gemäß der besonders bevorzugten Variante des erfindungsgemäßen Verfahrens mit einem Strichcode versehenen und mit einer Schicht aus einem Elektrodenmaterial beschichteten Stromkollektors,
Fig. 3 einen mit mehreren Einzelcodes versehenen und mit einer Schicht aus einem Elektrodenmaterial beschichteten Stromkollektor (nicht erfindungsgemäß),
Fig. 4 einen mit mehreren Einzelcodes versehenen und mit einer Schicht aus einem Elektrodenmaterial beschichteten Stromkollektor (nicht erfindungsgemäß),
Fig. 5 eine Ausführungsform eines zylindrischen Verbundkörpers, auf dessen Mantel ein maschinenlesbarer Code aufgetragen ist (nicht erfindungsgemäß).
Fig. 6 eine weitere Ausführungsform eines zylindrischen Verbundkörpers, auf dessen Mantel ein maschinenlesbarer Code aufgetragen ist (nicht erfindungsgemäß).

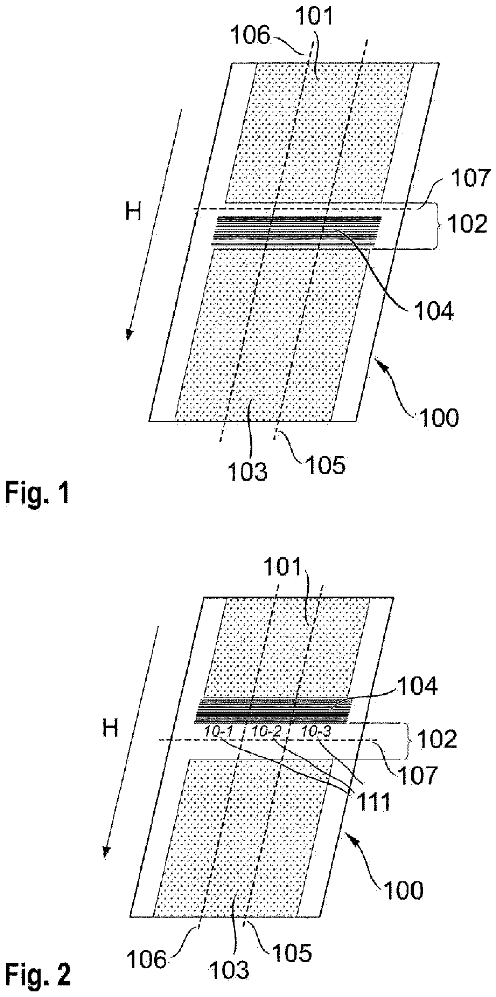

Der in Fig. 1 dargestellte Stromkollektor 100 umfasst in alternierender Abfolge mit Elektrodenmaterial beschichtete Abschnitte 101 und 103 sowie unbeschichtete Abschnitte 102. Bei dem Stromkollektor 100 handelt es sich um eine bandförmige Metallfolie. Das Elektrodenmaterial ist in Form einer dünnen Schicht auf den Stromkollektor 100 aufgebracht. Der unbeschichtete Abschnitt 102 trennt die beiden beschichteten Abschnitte 101 und 103. In dem unbeschichteten Abschnitt 102 ist ein Strichcode 104 unmittelbar auf den Stromkollektor 100 aufgebracht. Der Strichcode 104 besteht aus Linien, die senkrecht zur Haupterstreckungsrichtung H des Stromkollektors 101 ausgerichtet sind. Der Strichcode 104 ist dem Abschnitt 103 zugeordnet und kennzeichnet diesen. Er transportiert eine dem Abschnitt 103 zugeordnete Nummer.

Bei zwei Längsschnitten entlang den parallel zur Haupterstreckungsrichtung H ausgerichteten Linien 105 und 106 durch den Stromkollektor 100 werden die beschichteten Abschnitte 101 und 103 in jeweils drei Teilabschnitte unterteilt. Jeder der aus dem Abschnitt 103 resultierenden Teilabschnitte ist auch nach dem Längsschnitt durch den Strichcode 104 gekennzeichnet, der bei den Längsschnitten ebenfalls durchtrennt wird.

Ein Querschnitt durch einen nicht mit dem Strichcode 104 versehenen Bereich des Abschnitts 102 entlang der Linie 107 trennt die Abschnitte 101 und 103 voneinander.

Der in Fig. 2 dargestellte Stromkollektor 100 umfasst in alternierender Abfolge mit Elektrodenmaterial beschichtete Abschnitte 101 und 103 sowie unbeschichtete Abschnitte 102. Bei dem Stromkollektor 100 handelt es sich um eine bandförmige Metallfolie. Das Elektrodenmaterial ist in Form einer dünnen Schicht auf den Stromkollektor 100 aufgebracht. Der unbeschichtete Abschnitt 102 trennt die beiden beschichteten Abschnitte 101 und 103. In dem beschichteten Abschnitt 101 ist ein Strichcode 104 unmittelbar auf das Elektrodenmaterial aufgebracht. Der Strichcode 104 besteht aus Linien, die senkrecht zur Haupterstreckungsrichtung H des Stromkollektors 101 ausgerichtet sind. Der Strichcode 104 ist dem Abschnitt 101 zugeordnet und kennzeichnet diesen. Er transportiert eine dem Abschnitt 101 zugeordnete Nummer.

Bei zwei Längsschnitten entlang den parallel zur Haupterstreckungsrichtung H ausgerichteten Linien 105 und 106 durch den Stromkollektor 100 werden die beschichteten Abschnitte 101 und 103 in jeweils drei Teilabschnitte unterteilt. Jeder der aus dem Abschnitt 101 resultierenden Teilabschnitte ist auch nach dem Längsschnitt durch den Strichcode 104 gekennzeichnet, der bei den Längsschnitten ebenfalls durchtrennt wird.

Die resultierenden Teilabschnitte sind lediglich anhand des Strichcodes nicht voneinander unterscheidbar. Es kann daher vorgesehen sein, zusätzlich zu dem Strichcode Nummern oder Zeichen auf den Stromkollektor aufzubringen, die eine Unterscheidung der Teilabschnitte ermöglichen. Beispielhaft sind die aus den Längsschnitten resultierenden Teilabschnitte in Fig. 2 jeweils nummeriert, siehe Bezugszeichen 111. Hier könnte die Zahl vor dem Bindestrich beispielsweise eine dem Abschnitt 101. Eine derartige ergänzende Kennzeichnung wäre natürlich auch bei der in Fig. 1 dargestellten Ausführungsform denkbar.

Ein Querschnitt durch den Abschnitt 102 entlang der Linie 107 trennt die Abschnitte 101 und 103 voneinander.

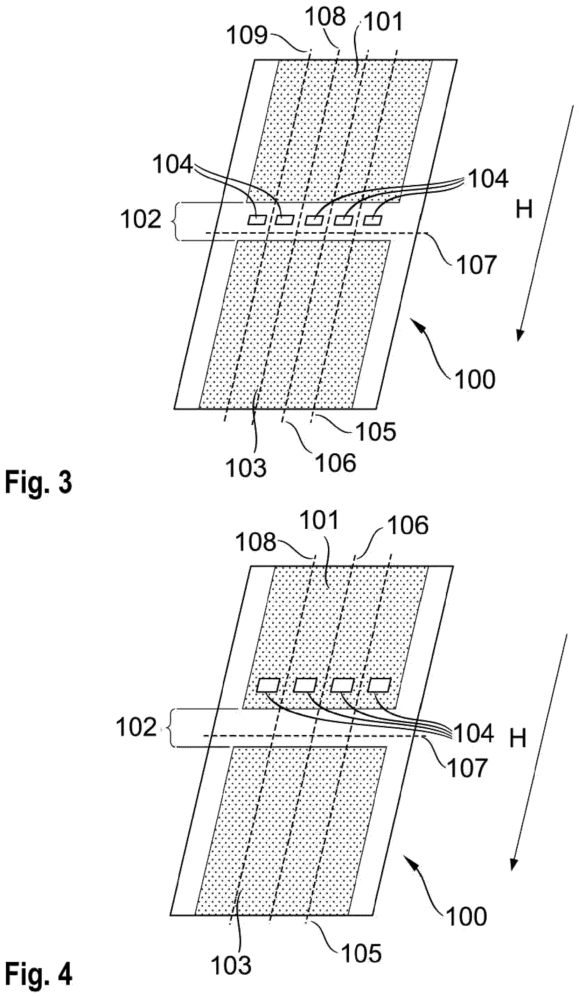

Der in Fig. 3 dargestellte Stromkollektor 100 umfasst in alternierender Abfolge mit Elektrodenmaterial beschichtete Abschnitte 101 und 103 sowie unbeschichtete Abschnitte 102. Bei dem Stromkollektor 100 handelt es sich um eine bandförmige Metallfolie. Das Elektrodenmaterial ist in Form einer dünnen Schicht auf den Stromkollektor 100 aufgebracht. Der unbeschichtete Abschnitt 102 trennt die beiden beschichteten Abschnitte 101 und 103. In dem unbeschichteten Abschnitt 102 sind mehrere Einzelcodes 104 unmittelbar auf den Stromkollektor 100 aufgebracht. Bei den Einzelcodes 104 handelt es sich jeweils um QR-Codes. Sie sind dem Abschnitt 101 zugeordnet und kennzeichnen diesen. Jeder der Einzelcodes 104 transportiert eine diesem Abschnitt 101 zugeordnete Nummer. Darüber hinaus transportiert jeder der Einzelcodes 104 eine weitere individuelle Nummer, die ihn von allen anderen dem Abschnitt 101 zugeordneten Einzelcodes 104 unterscheidet.

Bei vier Längsschnitten entlang der parallel zur Haupterstreckungsrichtung H des Stromkollektors 101 ausgerichteten Linien 105, 106. 108 und 109 durch den Stromkollektor 100 werden die beschichteten Abschnitte 101 und 103 in jeweils fünf Teilabschnitte unterteilt. Jeder der aus dem Abschnitt 101 resultierenden Teilabschnitte ist auch nach den Längsschnitten durch einen der Einzelcodes 104 gekennzeichnet und kann von anderen Teilabschnitten mit Hilfe der weiteren individuellen Nummer unterschieden werden.

Ein Querschnitt durch den Abschnitt 102 entlang der Linie 107 trennt die Abschnitte 101 und 103 voneinander.

Der in Fig. 4 dargestellte Stromkollektor 100 umfasst in alternierender Abfolge mit Elektrodenmaterial beschichtete Abschnitte 101 und 103 sowie unbeschichtete Abschnitte 102. Bei dem Stromkollektor 100 handelt es sich um eine bandförmige Metallfolie. Das Elektrodenmaterial ist in Form einer dünnen Schicht auf den Stromkollektor 100 aufgebracht. Der unbeschichtete Abschnitt 102 trennt die beiden beschichteten Abschnitte 101 und 103. In dem beschichteten Abschnitt 101 sind mehrere Einzelcodes 104 unmittelbar auf das Elektrodenmaterial aufgebracht. Bei den Einzelcodes 104 handelt es sich jeweils um QR-Codes. Sie sind dem Abschnitt 101 zugeordnet und kennzeichnen diesen. Jeder der Einzelcodes 104 transportiert eine diesem Abschnitt 101 zugeordnete Nummer. Darüber hinaus transportiert jeder der Einzelcodes 104 eine weitere individuelle Nummer, die ihn von allen anderen dem Abschnitt 101 zugeordneten Einzelcodes 104 unterscheidet.

Bei drei Längsschnitten entlang der parallel zur Haupterstreckungsrichtung ausgerichteten Linien 105, 106 und 108 durch den Stromkollektor 100 werden die beschichteten Abschnitte 101 und 103 in jeweils vier Teilabschnitte unterteilt. Jeder der aus dem Abschnitt 101 resultierenden Teilabschnitte ist auch nach den Längsschnitten durch einen der Einzelcodes 104 gekennzeichnet und kann von anderen Teilabschnitten mit Hilfe der weiteren individuellen Nummer unterschieden werden.

Ein Querschnitt durch den Abschnitt 102 entlang der Linie 107 trennt die Abschnitte 101 und 103 voneinander.

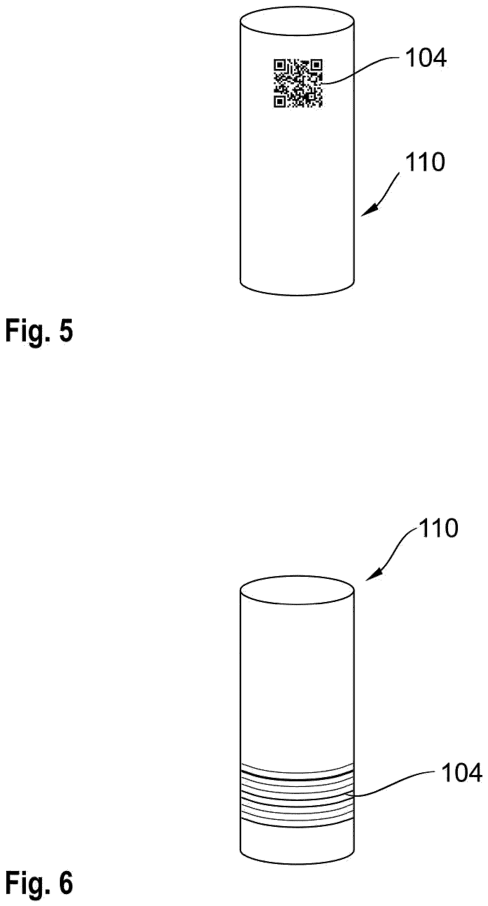

Der in Fig. 5 dargestellte, aus Elektroden und Separatoren durch spiralförmige Aufwicklung gebildete zylindrische Verbundkörper 110 ist durch einen QR-Code 104 gekennzeichnet. DerQR-Code 104 ist auf die Außenseite des Mantels des Verbundkörpers 110 aufgebracht.

Die Außenseite des Mantels kann durch eine äußere Windung eines der Separatoren des Verbundkörpers 110 oder durch eine Klebefolie gebildet sein. Der QR-Code 104 (oder auch ein anderer maschinenlesbarer Code) kann unmittelbar auf die Außenseite, also insbesondere auf die Windung des Separators oder die Klebefolie, aufgebracht sein, beispielsweise mittels eines Druckverfahrens. Alternativ kann sich der QR-Code 104 (oder auch ein anderer maschinenlesbarer Code) auch auf einem Etikett befinden, das auf die Außenseite aufgeklebt wurde.

Es ist auch möglich, dass der QR-Code 104 (oder auch ein anderer maschinenlesbarer Code) auf einen Klebestreifen aufgebracht ist, der zur Fixierung einer außenliegenden Windung des durch Wicklung gebildeten Verbundkörpers 110, beispielsweise einer Windung eines Separatorbandes, auf die Außenseite des Mantels des Verbundkörpers 110 aufgeklebt ist. Oder mit anderen Worten, ein Klebeetikett mit einem darauf aufgebrachten QR-Code kann zur Fixierung des Wickels eingesetzt werden.

Der in Fig. 6 dargestellte zylindrische Verbundkörper 110 ist durch einen Strichcode 104 gekennzeichnet. Der Strichcode 104 ist auf den Mantel des Verbundkörpers 110 aufgebracht. Bei den Strichen des Codes handelt es sich um kreisförmige Striche, die den Mantel umlaufen.

## Patentansprüche

1. Verfahren zur Herstellung zur Energiespeicherung befähigter elektrochemischer Zellen mit
- einem Gehäuse, das einen Innenraum einschließt, und
- einem in dem Innenraum angeordneten Verbundkörper, der aus mindestens zwei Elektroden und mindestens einem Separator gebildet ist,
wobei zur Herstellung der Elektroden
a. mindestens eine Schicht aus einem Elektrodenmaterial auf einen eine Beschichtungsvorrichtung durchlaufenden bandförmigen Stromkollektor aufgebracht wird,
b. das Aufbringen der Schicht intermittierend erfolgt, so dass der Stromkollektor nach Durchlaufen der Beschichtungsvorrichtung in Längsrichtung in mit Elektrodenmaterial beschichtete Abschnitte und dazwischen liegende unbeschichtete Abschnitte unterteilbar ist, und
c. der mit Elektrodenmaterial beschichtete bandförmige Stromkollektor mindestens eine Trennvorrichtung durchläuft, in der
- in Längsrichtung die beschichteten und die unbeschichteten Abschnitte und
- in Querrichtung die unbeschichteten Abschnitte
durchtrennt werden, so dass aufeinanderfolgende der mit Elektrodenmaterial beschichteten Abschnitte voneinander separiert werden und jeder der beschichteten Abschnitte in Längsrichtung in mindestens zwei Teilabschnitte aufgetrennt wird, wobei
d. jedem der beschichteten Abschnitte eine maschinenlesbare Codierung zugeordnet wird, die den jeweiligen Abschnitt kennzeichnet, und
e. die Codierung derart auf den bandförmigen Stromkollektor und/oder das darauf aufgebrachte Elektrodenmaterial aufgebracht wird, dass sie nach dem Durchlaufen der mindestens einen Trennvorrichtung auf jedem der Teilabschnitte abrufbar ist und eine Zuordenbarkeit der Teilabschnitte zu dem codierten Abschnitt ermöglicht,
**dadurch gekennzeichnet, dass**
f. die Codierung Linien umfasst oder aus Linien besteht, die senkrecht oder schräg zur Haupterstreckungsrichtung des bandförmigen Stromkollektors auf den bandförmigen Stromkollektor und/oder das darauf aufgebrachte Elektrodenmaterial aufgebracht werden.

2. Verfahren nach Anspruch 1 mit dem folgenden zusätzlichen Merkmal:
a. Die maschinenlesbare Codierung umfasst einen Strichcode oder ist ein Strichcode.

3. Verfahren nach einem der vorstehenden Ansprüche mit dem folgenden zusätzlichen Merkmal:
a. Die einem beschichteten Abschnitt zugeordnete Codierung wird in mindestens einem der diesem Abschnitt unmittelbar angrenzenden unbeschichteten Abschnitte auf den Stromkollektor aufgebracht.

4. Verfahren nach einem der vorstehenden Ansprüche mit dem folgenden zusätzlichen Merkmal:
a. Die Codierung beinhaltet, gegebenenfalls neben der Kennzeichnung des Abschnitts, das Ergebnis mindestens einer Prüfung, der der Abschnitt unterzogen wurde.
b. Die Codierung beinhaltet, gegebenenfalls neben der Kennzeichnung des Abschnitts und/oder des Ergebnisses der mindestens einen Prüfung, Informationen zur Länge und/oder zur Breite des Abschnitts.

5. Elektrode, hergestellt nach einem Verfahren nach einem der vorhergehenden Ansprüche, mit den folgenden Merkmalen:
a. Sie umfasst einen maschinenlesbaren Code, welcher Informationen beinhaltet, die eine Zuordenbarkeit der Elektrode zu einem mit Elektrodenmaterial beschichteten Abschnitt eines bandförmigen Stromkollektors, aus dem die Elektrode gefertigt wurde, ermöglichen.
b. Die Elektrode ist bandförmig ausgebildet.
c. Die Codierung, insbesondere der Strichcode, umfasst Linien oder besteht aus Linien, die senkrecht oder schräg zur Haupterstreckungsrichtung der Elektrode ausgerichtet sind.

6. Anlage zur Herstellung v on zur Energiespeicherung befähigten elektrochemischen Zellen mit den folgenden Merkmalen:
a. Sie umfasst eine Beschichtungsvorrichtung, in der eine Schicht aus einem Elektrodenmaterial intermittierend auf einen die Beschichtungsvorrichtung durchlaufenden bandförmigen Stromkollektor aufgebracht wird.
b. Sie umfasst mindestens eine Trennvorrichtung, die dazu ausgebildet ist, den mit Elektrodenmaterial beschichteten bandförmigen Stromkollektor in Längsrichtung und in Querrichtung zu durchtrennen.
c. Sie umfasst eine Vorrichtung zur Aufbringung einer maschinenlesbaren Codierung auf den bandförmigen Stromkollektor und/oder das darauf aufgebrachte Elektrodenmaterial, welche dazu ausgebildet ist,
- Linien senkrecht oder schräg zur Haupterstreckungsrichtung des bandförmigen Stromkollektors
auf den bandförmigen Stromkollektor und/oder das darauf aufgebrachte Elektrodenmaterial aufzubringen.

## Claims

1. Method for producing electrochemical cells capable of energy storage and comprising
- a housing which encloses an interior, and
- an assembly disposed in the interior and formed of at least two electrodes and at least one separator,
where, for the production of the electrodes,
a. at least one layer of an electrode material is applied to a tapelike current collector passing through a coating apparatus,
b. the layer is applied intermittently, so that the current collector after passing through the coating apparatus is subdivisible in longitudinal direction into sections coated with electrode material and uncoated sections between them, and
c. the tapelike current collector coated with electrode material passes through at least one parting apparatus, in which
- in longitudinal direction the coated and the uncoated sections and
- in transverse direction the uncoated sections
are severed, so that successive sections coated with electrode material are dissociated from one another and each of the coated sections is separated in longitudinal direction into at least two subsections,
wherein
d. each of the coated sections is assigned a machine-readable coding which identifies the respective section, and
e. the coding is applied to the tapelike current collector and/or to the electrode material applied thereon, in such a way that after passing through the at least one parting apparatus, the coding is retrievable on each of the subsections and enables assignability of the subsections to the coded section,
**characterized in that**
f. the coding comprises lines or consists of lines which are applied perpendicularly or obliquely to the principal extent direction of the tapelike current collector to the tapelike current collector and/or to the electrode material applied thereon.

2. Method according to Claim 1, having the following additional feature:
a. the machine-readable coding comprises a barcode or is a barcode.

3. Method according to one of the preceding claims, having the following additional feature:
a. the coding assigned to a coated section is applied to the current collector in at least one of the uncoated sections immediately bordering that section.

4. Method according to one of the preceding claims, having the following additional feature:
a. The coding includes, optionally as well as the identification of the section, the result of at least one test to which the section has been subjected.
b. The coding includes, optionally as well as the identification of the section and/or the result of the at least one test, information on the length and/or on the width of the section.

5. Electrode produced by a method according to any one of the preceding claims, having the following features:
a. It comprises a machine-readable code which includes information which enables assignability of the electrode to a section, coated with electrode material, of a tapelike current collector from which the electrode has been fabricated.
b. The electrode is of tapelike design.
c. The coding, more particularly the barcode, comprises lines or consists of lines which are oriented perpendicularly or obliquely to the principal extent direction of the electrode.

6. System for producing electrochemical cells capable of energy storage, having the following features:
a. It comprises a coating apparatus in which a layer of an electrode material is applied intermittently to a tapelike current collector passing through the coating apparatus.
b. It comprises at least one parting apparatus which is designed to sever the tapelike current collector, coated with electrode material, in longitudinal direction and in transverse direction.
c. It comprises an apparatus for applying a machine-readable coding to the tapelike current collector and/or to the electrode material applied thereon, said apparatus being designed to apply
- lines perpendicularly or obliquely to the principal extent direction of the tapelike current collector
to the tapelike current collector and/or to the electrode material applied thereon.

## Revendications

1. Procédé pour la fabrication de cellules électrochimiques aptes à l'accumulation d'énergie, comportant
- un boîtier qui renferme un espace interne, et
- un corps composite disposé dans l'espace interne, qui est constitué d'au moins deux électrodes et d'au moins un séparateur,
dans lequel, pour la fabrication des électrodes
a. au moins une couche d'un matériau d'électrode est appliquée sur un collecteur de courant en forme de bande traversant un dispositif de revêtement,
b. l'application de la couche s'effectue par intermittence, de sorte qu'après avoir traversé le dispositif de revêtement le collecteur de courant peut être divisé dans le sens longitudinal en tronçons revêtus de matériau d'électrode et en tronçons non revêtus se trouvant entre ceux-ci, et
c. le collecteur de courant en forme de bande revêtu de matériau d'électrode passe par au moins un dispositif de sectionnement dans lequel sont séparés
- dans le sens longitudinal, les tronçons revêtus et les tronçons non revêtus et
- dans le sens transversal, les tronçons non revêtus, de sorte que des tronçons successifs revêtus de matériau d'électrode sont séparés les uns des autres et chacun des tronçons revêtus est scindé dans le sens longitudinal en au moins deux tronçons partiels,
dans lequel
d. à chacun des tronçons revêtus est attribué un codage lisible par machine, qui identifie le tronçon respectif, et
e. le codage est appliqué sur le collecteur de courant en forme de bande et/ou sur le matériau d'électrode appliqué sur celui-ci, de sorte qu'il est consultable sur chacun des tronçons partiels après le passage à travers ledit au moins un dispositif de séparation et permet une affectabilité des tronçons partiels au tronçon codé,
**caractérisé en ce que**
f. le codage comprend des lignes ou est constitué de lignes, qui sont appliquées perpendiculairement ou obliquement par rapport à la direction d'extension principale du collecteur de courant en forme de bande sur le collecteur de courant en forme de bande et/ou sur le matériau d'électrode appliqué sur celui-ci.

2. Procédé selon la revendication 1, présentant la caractéristique supplémentaire suivante :
a. le codage lisible par machine comprend un code à barres ou est un code à barres.

3. Procédé selon l'une quelconque des revendications précédentes, présentant la caractéristique supplémentaire suivante :
a. le codage affecté à un tronçon revêtu est appliqué sur le collecteur de courant dans au moins un des tronçons non revêtus directement adjacents à ce tronçon.

4. Procédé selon l'une quelconque des revendications précédentes, présentant la caractéristique supplémentaire suivante :
a. le codage comprend, éventuellement en plus de l'identification du tronçon, le résultat d'au moins un essai auquel a été soumis le tronçon.
b. le codage comprend, éventuellement en plus de l'identification du tronçon et/ou du résultat dudit au moins un essai, des informations relatives à la longueur et/ou à la largeur du tronçon.

5. Électrode, fabriquée conformément à un procédé selon l'une quelconque des revendications précédentes, présentant les caractéristiques suivantes :
a. elle comprend un code lisible par machine, qui contient des informations qui permettent une affectabilité de l'électrode à un tronçon revêtu de matériau d'électrode d'un collecteur de courant en forme de bande, à partir duquel l'électrode a été fabriquée.
b. l'électrode est configurée en forme de bande.
c. le codage, en particulier le code à barres, comprend des lignes ou est constitué de lignes, qui sont orientées perpendiculairement ou obliquement par rapport à la direction d'extension principale de l'électrode.

6. Installation destinée à la fabrication de cellules électrochimiques aptes à l'accumulation d'énergie, présentant les caractéristiques suivantes :
a. Elle comprend un dispositif de revêtement dans lequel une couche d'un matériau d'électrode est appliquée par intermittence sur un collecteur de courant en forme de bande traversant le dispositif de revêtement.
b. Elle comprend au moins un dispositif de sectionnement qui est conçu pour sectionner dans le sens longitudinal et dans le sens transversal le collecteur de courant en forme de bande revêtu de matériau d'électrode.
c. Elle comprend un dispositif destiné à l'application d'un codage lisible par machine sur le collecteur de courant en forme de bande et/ou sur le matériau d'électrode appliqué sur celui-ci, qui est conçu à cet effet,
- à appliquer des lignes perpendiculaires ou obliques par rapport à la direction d'extension principale du collecteur de courant en forme de bande
sur le collecteur de courant en forme de bande et/ou sur le matériau d'électrode appliqué sur celui-ci.
